Europäisches Patentamt

European Patent Office

Office européen des brevets

(11) Numéro de publication: **0 289 425 B1**

(19)

# (12) FASCICULE DE BREVET EUROPEEN

(45) Date de publication de fascicule du brevet: **16.12.92** (51) Int. Cl.5: **H02K 19/24**, H02K 19/20

(21) Numéro de dépôt: **88401041.4**

(22) Date de dépôt: **28.04.88**

(54) **Alternateur ayant un enroulement induit comportant des composants redresseurs.**

(30) Priorité: **29.04.87 FR 8706076**

(43) Date de publication de la demande:
**02.11.88 Bulletin 88/44**

(45) Mention de la délivrance du brevet:
**16.12.92 Bulletin 92/51**

(84) Etats contractants désignés:
**DE ES FR IT**

(56) Documents cités:
EP-A- 0 038 879          FR-A- 1 268 205
FR-A- 2 268 385          FR-A- 2 452 816
GB-A- 24 212             GB-A- 890 894
US-A- 4 459 502

(73) Titulaire: **VALEO EOUIPEMENTS ELECTRI-
OUES MOTEUR
2, Rue André Boulle
F-94000 Creteil(FR)**

(72) Inventeur: **Kupisiewicz, Stefan
Rue Bois d'Evegnée 55
B-4634 Soumagne(BE)**
Inventeur: **Schoebrechts, Jacques
Chaussée de Wégimont 61
B-4634 Soumagne(BE)**

(74) Mandataire: **Gamonal, Didier
Société VALEO Service Propriété Industrielle 30, rue Blanqui
F-93406 Saint Ouen(FR)**

Rank Xerox (UK) Business Services

EP 0 289 425 B1

## Description

L'invention concerne un alternateur comportant un dispositif de redressement statique. Cet alternateur est utilisable notamment pour l'alimentation électrique des véhicules automobiles.

On sait que, pour réaliser des alternateurs de petite puissance, on utilise assez fréquemment des machines où le stator porte un premier bobinage alors que le rotor en porte un second : dans ce cas, il est nécessaire d'équiper la machine de balais, qui frottent sur un collecteur rotorique, et l'on sait qu'une telle construction n'est pas satisfaisante, d'une part, sur le plan du prix de revient et, d'autre part, sur le plan de la longévité de fonctionnement. On a déjà proposé divers types de construction permettant d'éviter l'utilisation d'un collecteur équipé de balais ; par exemple, dans le brevet FR-A-1 591 189 et dans ses certificats d'addition, notamment les certificats d'addition FR-A-2 044 213 et FR-A-2 044 313, on a déjà proposé de maintenir le bobinage rotorique par une cage fixée à la base des encoches de stator, les pattes radiales de la cage traversant la partie magnétique du rotor qui recouvre extérieurement le bobinage rotorique. Une telle construction donne satisfaction sur le plan de la longévité du matériel, mais conduit à une certaine complexité dans la fabrication en raison de la mise en oeuvre de la cage; il s'ensuit un prix de revient relativement élevé.

Pour pallier les inconvénients susmentionnés, on a déjà proposé, dans la demande de brevet européen EP-A-38 879, un alternateur, dont le stator porte à la fois l'enroulement inducteur et l'enroulement induit , le rotor porte un troisième enroulement constitué par un ensemble de jeux de barres, dont chacun comprend deux barres interconnectées. Par un choix judicieux du nombre de jeux de barres par rapport au nombre de paires de pôles de l'enroulement statorique de pas polaire le plus large, on obtient un alternateur ayant un débit extrêmement satisfaisant. L'enroulement du rotor d'une telle machine est, de préférence, réalisé sous la forme d'une cage d'écureuil ; cette réalisation simple conduit à un prix de revient réduit et permet d'adopter des vitesses de rotation élevées, ce qui améliore encore les performances électriques de la machine.

On connaît également des alternateurs à réluctance variable dont la structure permet d'assurer la suppression des contacts frottants. Cependant, ce type de machine conduit généralement à un rapport poids/puissance fournie relativement élevé, ce qui restreint considérablement leur utilisation, notamment dans le domaine de l'alimentation électrique des véhicules automobiles.

Pour les alternateurs dont l'enroulement inducteur est porté par le stator et dont la puissance de sortie est utilisée sous forme de courant continu après passage dans un pont redresseur, on peut trouver avantage, pour améliorer la puissance fournie par unité de poids, à compounder les pôles inducteurs avec le courant redressé de sortie. Ce compoundage est aisément réalisable dès lors que l'enroulement inducteur est fixe et que la sortie est délivrée sous forme de courant continu ; néanmoins, il faut disposer sur les pôles inducteurs un bobinage supplémentaire de compoundage, ce qui complique la réalisation de la machine et augmente de façon sensible son prix de revient.

Le but de la présente invention est de proposer un alternateur fournissant en sortie un courant continu et permettant d'atteindre une valeur élevée de la puissance fournie par unité de poids, grâce à un fonctionnement où l'on réalise un effet de compoundage sans pourtant avoir besoin d'un bobinage complémentaire de compoundage. Selon l'invention, on utilise le bobinage induit pour renforcer le rôle de l'enroulement inducteur ; pour ce faire, on n'autorise la circulation des courants induits que dans le sens où les ampères-tours qui résultent de ces courants renforcent le champ magnétique inducteur qui les a généré. Ce traitement des courants induits circulant dans l'enroulement induit conduit à obtenir, à la sortie de la machine, un courant redressé puisque le courant induit ne peut circuler que dans un seul sens, à savoir celui où il renforce l'action du courant continu inducteur dans les pôles du stator. Par conséquent, il n'est donc pas nécessaire d'associer un Pont redresseur à la sortie de l'enroulement induit ; mais il est, par contre, nécessaire d'associer aux différentes phases de l'enroulement induit des composants électroniques, commandables ou non commandables, susceptibles de bloquer le courant induit dans un sens et d'autoriser la circulation desdits courants induits dans l'autre sens. En outre, les bobinages induits devant jouer le rôle d'enroulements inducteurs série de compoundage, il s'ensuit que les enroulements inducteur et induit doivent nécessairement être portés tous les deux par le stator de la machine.

Le blocage de la circulation du courant induit dans l'enroulement induit pour le sens de circulation souhaité est avantageusement obtenu en associant aux phases de l'enroulement induit des diodes selon une disposition permettant d'obtenir le blocage désiré, compte tenu du nombre et du positionnement des phases sur le stator. Les montages que l'on peut prévoir peuvent comporter un nombre de diodes plus ou moins grand par rapport au nombre de phases de l'enroulement induit et, selon les montages adoptés, le débit de l'alternateur selon l'invention est plus ou moins élevé et plus ou moins facile à réguler car le degré de compoundage est plus ou moins fort.

Il convient par ailleurs de noter que, dans une machine selon l'invention, la puissance fournie en sortie dépend fondamentalement du sens du courant continu circulant dans l'enroulement inducteur. En effet, si l'on inverse le sens du courant inducteur, les ampères-tours qui résultent du courant circulant dans l'enroulement induit viennent se soustraire aux ampères-tours de l'enroulement inducteur au lieu de s'y ajouter, ce qui détériore considérablement le débit de la machine.

Dans la description et dans les revendications on dira qu'une machine est à flux moyen non nul lorsque, à vide, le flux qui traverse chaque bobine élémentaire de l'enroulement induit a une valeur moyenne non nulle.

La présente invention a, en conséquence, pour objet, un alternateur à flux moyen non nul comportant un stator et un rotor coaxiaux, le stator portant d'une part, un premier enroulement inducteur alimenté en courant continu et d'autre part, un deuxième enroulement induit, le rotor portant un troisième enroulement, l'agencement étant tel que l'enroulement inducteur génère un champ magnétique induisant des courants dans le troisième enroulement, lesdits courants générant un autre champ magnétique inducteur en rotation relative par rapport à la partie mobile avec interaction magnétique avec l'enroulement induit, les bobines élémentaires de l'enroulement induit étant d'une part, magnétiquement couplées, pour au moins certaines positions du rotor, avec l'enroulement inducteur et d'autre part, reliées aux bornes de la machine par l'intermédiaire d'au moins un composant électronique, commandable ou non commandable, pour fournir un courant continu, caractérisé par le fait que le (ou les) composant(s) électronique(s) commandable(s) ou non commandable(s), n'autorise(nt) la circulation du courant, dans les bobines élémentaires de l'enroulement induit, que dans le sens où il crée, dans les pôles du stator, un flux de même sens que le flux établi par l'enroulement inducteur.

Pour mieux faire comprendre l'objet de l'invention, on va en décrire maintenant, à titre d'exemples purement illustratifs et non limitatifs, plusieurs modes de réalisation représentés sur le dessin annexé.

Sur ce dessin :
- la figure 1 représente schématiquement en coupe axiale un alternateur selon l'invention du type décrit dans la demande de brevet européen EP-A-38 879 ;
- la figure 2 représente, en élévation, une fraction de stator non bobinée de l'alternateur de la figure 1 ;
- la figure 3 représente un schéma linéaire des pôles de la machine de la figure 1 avec un câblage des phases de l'enroulement induit qui correspond à l'invention définie dans la demande de brevet européen EP-A-38 879, c'est-à-dire à l'état de la technique, l'enroulement inducteur n'ayant pas été figuré ;
- la figure 4 représente une figuration linéaire du stator de la machine de la figure 1, analogue à celle qui est représentée sur la figure 3, les bobinages de l'enroulement induit étant les mêmes que ceux figurant sur la figure 3, mais ces bobinages étant munis de diodes pour que la machine de la figure 1 constitue une machine selon l'invention ;
- la figure 5 représente schématiquement les quatre phases de la machine de la figure 4 reliées entre elles par l'intermédiaire de quatre diodes pour constituer une machine selon l'invention ;
- la figure 6 représente un mode de câblage permettant de relier les phases induites de la machine de la figure 1 au moyen de six diodes ;
- la figure 7 représente pour un alternateur du type de celui de la figure 1 un dessin linéaire du stator avec un mode de câblage particulier des deux phases de l'enroulement induit, ces deux phases étant branchées par l'intermédiaire de deux diodes pour que la machine soit conforme à l'invention, l'enroulement inducteur n'ayant pas été représenté pour plus de clarté ;
- les figures 7A, 7B et 7C représentent des schémas équivalents à l'enroulement induit de la machine de la figure 7 pour l'une des alternances du courant induit.
- Les figures 7D, 7E et 7C représentent des schémas équivalents au câblage de la figure 7 pour l'autre alternance du courant induit.

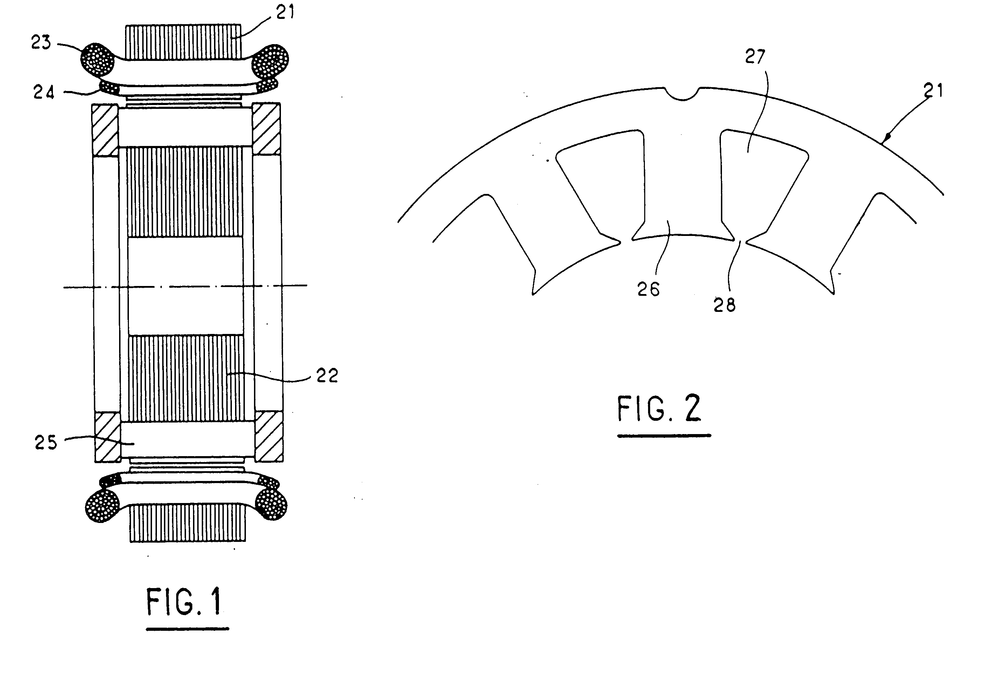

En se référant aux figures 1 et 2 on voit que l'on a désigné par 21 le stator de l'alternateur selon l'invention. Le stator 21 est une couronne circulaire comportant des pôles radiaux 26 séparés les uns des autres par des encoches 27. Le stator 21 est associé à un rotor 22, qui est susceptible de tourner autour d'un axe confondu avec l'axe du stator. Le stator 21 et le rotor 22 sont réalisés en toles magnétiques feuilletées. Dans l'exemple décrit, le stator 21 comporte douze encoches 27 et douze pôles 26. Le rotor 22 comporte une cage d'écureuil constituée par des barres 25 parallèles à l'axe du rotor et régulièrement disposées à la périphérie dudit rotor ; ces barres sont toutes reliées électriquement entre elles pour former la cage d'écureuil et sont constituées d'un métal électroconducteur, tel que le cuivre ou l'aluminium. Deux barres adjacentes sont séparées par des secteurs de tôle magnétique qui constituent les dents du rotor 22.

Du fait que l'un des enroulements 23, 24 a un pas polaire multiple pair de l'autre, le nombre de barres du rotor est égal à $\frac{2P}{R} \pm K \frac{2P}{2q}$ où 2P est le nombre de dents portant un enroulement inducteur, 2q le nombre de phases, K et R sont des facteurs égaux à 1 ou à 2.

La forme des sections droites des pôles définit les logements où sont placées les barres 25. Dans l'exemple décrit, le rotor comporte neuf barres.

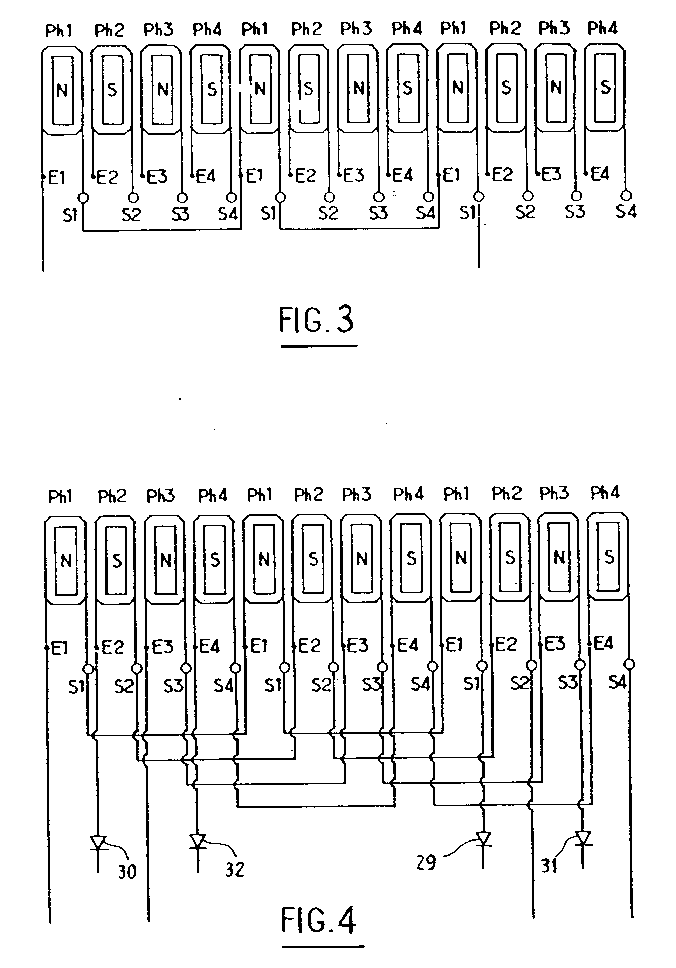

Le stator 21 porte un enroulement inducteur 23. Cet enroulement inducteur est bobiné de façon que l'on ait sur le stator une alternance de pôles Nord et de pôles Sud comme représenté sur la figure 3.

La figure 3 représente une figuration linéaire du stator de la machine de la figure 1 où l'on a représenté l'enroulement induit 24 d'un alternateur, du type de celui de la figure 1, correspondant à l'état de la technique tel que décrit dans la demande de brevet européen EP-A-38 879. Un tel bobinage induit est constitué de quatre phases Ph1, Ph2, Ph3, Ph4, chaque phase comportant en série trois bobines élémentaires réalisées chacune autour d'un pôle inducteur du stator. Sur le dessin, on a désigné par E1, E2, E3, E4 les entrées des bobines élémentaires des quatre phases Ph1, Ph2, Ph3, Ph4, les sorties desdites bobines élémentaires étant désignées respectivement par S1, S2, S3, S4. La figure 3 correspond donc à un alternateur de l'état de la technique.

La figure 4 représente le même stator que la figure 3 avec les mêmes bobinages induits, les enroulements inducteurs n'étant pas représentés comme c'était le cas sur la figure 3, mais étant réalisés, comme pour la figure 3, de façon quelconque pour faire apparaître une succession de pôles Nord et de pôles Sud.

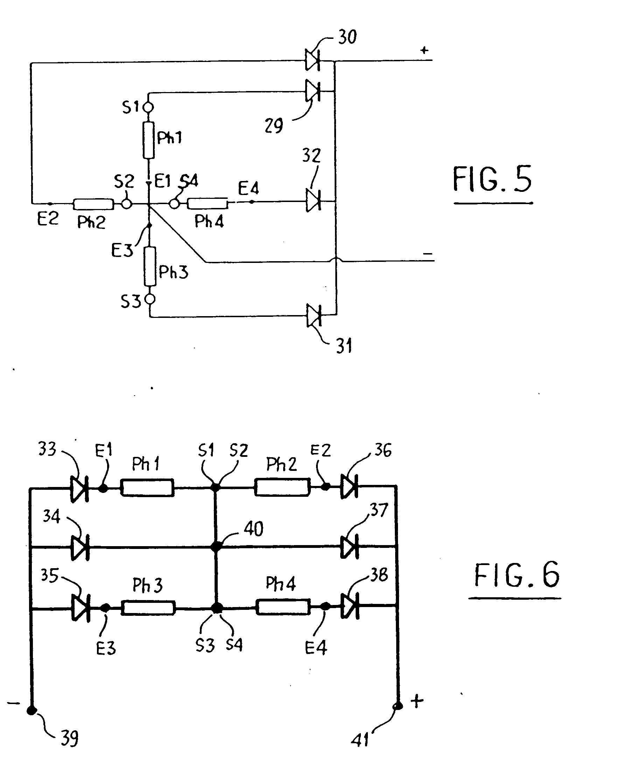

Comme il apparaît sur la figure 4, chacune des quatre phases induites comporte, en série, une diode 29, 30, 31, 32 pour les phases Ph1, Ph2, Ph3, Ph4 respectivement. Le branchement des quatre phases et de leurs quatre diodes associées est représenté sur la figure 5. On voit que l'on a réuni sur un point commun les entrées des phases Ph1 et Ph3 et les sorties des phases Ph2 et Ph4 ; ce point commun constitue la borne négative de l'alternateur. Les diodes sont reliées aux extrémités des quatre phases qui ne sont pas connectées au point commun ; toutes les sorties des diodes sont reliées à la borne positive de l'alternateur.

Si l'on compare les puissances fournies par la machine correspondant aux figures 1, 2, 4 et 5 d'une part, et/ou aux figures 1, 2 et 3 d'autre art, le redressement du courant alternatif quadriphasé obtenu étant, dans ce dernier cas, réalisé par un pont redresseur double alternance, on constate que, pour un même courant inducteur et des bobinages identiques, on obtient à 1500 t/mn une augmentation de puissance d'environ 50% en utilisant la machine selon l'invention.

Comme il a été indiqué, le principe de l'invention est de renforcer le champ inducteur créé par l'enroulement inducteur par le champ créé par la circulation du courant induit lui-même. Ce but peut être obtenu en utilisant divers modes de câblage entre les phases de l'enroulement induit et en utilisant un nombre de diodes plus ou moins important suivant le câblage adopté.

Sur la figure 6, on a représenté un mode de câblage susceptible de remplacer celui qui a été précédemment décrit et qui est représenté sur la figure 5. Sur ce schéma, on a donc fait figurer les quatre phases induites de l'enroulement induit de la figure 4 et l'on a adopté un mode de liaison empêchant la circulation du courant induit dans les phases, lorsque le champ généré par ce courant induit vient s'opposer au champ inducteur généré par l'enroulement inducteur. Pour la réalisation de la figure 3, si l'on suppose un rotor se déplaçant de gauche à droite sur la figure, les courants dans les quatre phases sont électriquement décalés de 90° et se succèdent dans l'ordre Ph4, Ph3, Ph2, Ph1.

Connaissant le sens où doit circuler le courant induit pour renforcer le champ inducteur, on en déduit la mise en place possible des diodes dans le schéma présenté sur la figure 6.

Pour le schéma donné par la figure 6, on a effectué une comparaison entre l'alternateur selon l'invention utilisant ledit schéma et l'alternateur de la figure 3 associé à un pont redresseur double alternance, on constate que pour un même courant inducteur et des bobinages identiques, on obtient à 1500 t/mn une augmentation de puissance d'environ 100 %.

Enfin, sur la figure 6 on a représenté le mode de cablage suivant : la diode 34 est connectée entre la borne négative 39 de l'alternateur et le point commun 40 reliant S1, S2, S3 et S4, la diode 37, est située entre la borne positive 41 de l'alternateur et le point commun 40, les diodes 33 et 35 sont connectées entre la borne négative 39 et les entrées E1 et E3 des phases Ph1 et Ph3, les diodes 36 et 38 sont entre la borne Positive 41 et les entrées E2 et E4 des phases Ph2 et Ph4.

Le fonctionnement pour le mode de câblage ci-dessus consiste à redresser séparément, soit une phase entre deux diodes en série, à savoir la phase Ph1 pour les diodes 33 et 37, la phase Ph 2 pour les diodes 34 et 36, la phase Ph3 pour les diodes 35 et 37 et la phase Ph4 pour les diodes 34 et 38, soit deux phases mises en série, à savoir les phases Ph1 et Ph2 pour les diodes 33 et 36, les phases Ph1 et Ph4 pour les diodes 33 et 38, les phases Ph3 et Ph2 pour les diodes 35 et 36 et les phases Ph3 et Ph4 pour les diodes 35 et 38.

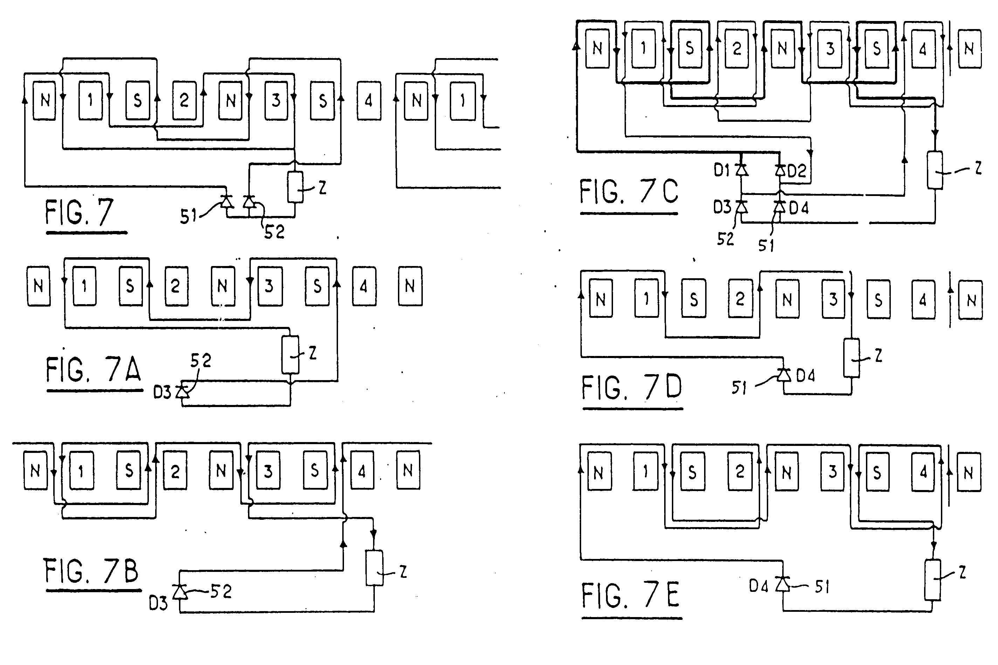

Les figures 7 et 7A à 7E sont destinées à donner, dans un cas particulier, une explication technique permettant de comprendre pourquoi l'effet de la mise en place des diodes dans l'alternateur selon l'invention peut être assimilé à un compoundage de l'alternateur correspondant de l'état de la technique, étant entendu que l'avantage considérable du dispositif selon l'invention est d'éviter la réalisation d'un bobinage de compoundage, ladite réalisation présentant généralement deux inconvénients essentiels, à savoir, d'une part, l'augmentation du prix de revient de la machine, en raison du cuivre consommé pour le bobinage supplémentaire et de la mise en place dudit bobinage sur le stator, et, d'autre part, le manque de place pour positionner le bobinage de compoundage sur le stator, ce qui entraîne l'obligation d'augmenter les dimensions de la machine et donc son encombrement et son poids.

Sur la figure 7, on a représenté, en schéma linéaire, un stator comportant une succession de pôles Nord et de pôles Sud réalisés par un enroulement inducteur non représenté sur la figure. Deux pôles Nord et Sud successifs sont séparés par un pôle ne portant pas de bobinage inducteur. On a représenté une séquence formée de deux pôles Nord et deux poles Sud, la machine comportant trois séquences de ce type sur le stator, c'est-à-dire que le stator a douze pôles et vingt quatre encoches. Le rotor est un rotor à cage d'écureuil, comme décrit dans la demande de brevet européen EP-A-38.879, qui comporte douze barres régulièrement réparties autour de son axe. L'enroulement inducteur est constitué de bobines élémentaires enroulées sur les pôles Nord et Sud du stator. L'enroulement induit représenté sur la figure 7 fait apparaître deux phases associées chacune à une diode 51,52. On a désigné par Z une résistance alimentée par l'alternateur.

Pendant l'alternance négative du courant induit, le schéma de la figure 7 est équivalent au schéma de la figure 7A puisque seule la diode 52 est passante. Or, le schéma de la figure 7A est équivalent au schéma de la figure 7B, qui est lui-même équivalent au schéma de la figure 7C tant qu'il s'agit de l'alternance négative du courant induit. Pendant l'alternance positive, le schéma de la figure 7 est équivalent au schéma de la figure 7D puisque seule la diode 51 est passante. Or, le schéma de la figure 7D est équivalent au schéma de la figure 7E qui, pendant cette alternance positive, est également équivalent au schéma de la figure 7C. Dans ces conditions, on constate que le schéma de la figure 7 est équivalent au schéma de la figure 7C aussi bien pour l'alternance positive que pour l'alternance négative du courant induit. Or, en examinant le schéma de la figure 7C, on constate qu'il représente le schéma-type d'un alternateur comportant un bobinage de compoundage, celui-ci étant figuré en traits forts sur la figure 7C, alors que le bobinage induit est figuré en traits fins (il est rappelé que l'enroulement inducteur shunt n'a pas été représenté sur la figure 7, pas plus que sur la figure 7C).

On voit donc que l'utilisation des diodes 51 et 52 pour empêcher la circulation du courant induit au moment où il aurait un effet s'opposant au champ inducteur, permet d'aboutir à un résultat équivalent à un fort compoundage de l'alternateur sans qu'il soit nécessaire de mettre en oeuvre un bobinage de compoundage supplémentaire.

## Revendications

1. Alternateur à flux moyen non nul comportant un stator (21) et un rotor (22) coaxiaux, le stator portant d'une part, un premier enroulement inducteur (23) alimenté en courant continu et, d'autre part, un deuxième enroulement induit (24), le rotor portant un troisième enroulement (25), l'agencement étant tel que l'enroulement inducteur (23) génère un champ induisant des courants dans le troisième enroulement (25), lesdits courants générant un autre champ inducteur en rotation relative par rapport à la partie mobile avec interaction magnétique avec l'enroulement induit (24), les bobines élémentaires de l'enroulement induit (24) étant d'une part, magnétiquement couplées, pour au moins certaines positions du rotor, avec l'enroulement inducteur (23) et, d'autre part, reliées aux bornes de la machine par l'intermédiaire d'au moins un composant électronique, commandable ou non commandable, pour fournir ou recevoir un courant continu, caractérisé par le fait que le (ou les) composant(s) électronique(s), commandable(s) ou non commandable(s), n'autorise(nt) la circulation du courant, dans les bobines élémentaires de l'enroulement induit, que dans le sens où il crée dans les pôles du stator un flux de même sens que le flux établi par l'enroulement inducteur.

2. Alternateur selon la revendication 1, caractérisé par le fait qu'il constitue une machine homopolaire.

3. Alternateur selon la revendication 1, caractérisé par le fait que son rotor (22) comporte une pluralité de couples de barres (25) électroconductrices, régulièrement réparties à sa périphérie, les deux barres d'un couple étant interconnectées.

4. Alternateur selon la revendication 3, caractérisé par le fait que chacune des barres (25) d'un couple est commune à deux couples de barres consécutifs, l'ensemble des barres formant une cage d'écureuil.

5. Alternateur selon la revendication 4, caractérisé par le fait que dans chaque encoche (27) sont disposées des portions d'enroulement inducteur (23) et d'enroulement induit (24).

6. Alternateur selon la revendication 4, caractérisé par le fait que l'un des enroulements (23,24) a un pas polaire multiple pair de l'autre, le nombre de de barres du rotor étant égal à $\frac{2P}{R} \pm K \frac{2P}{2q}$ où 2P est le nombre de pôles portant un enroulement inducteur, 2q le nombre de phases, K et R sont des facteurs égaux à 1 ou à 2.

7. Alternateur selon l'une des revendications 1 à 6, caractérisé par le fait que les composants électroniques, commandables ou non commandables, établissant un sens de circulation du courant dans les bobines élémentaires de l'enroulement induit (24) sont des diodes, ou des transistors, ou des thyristors ou tout autre interrupteur.

8. Alternateur selon la revendication 7, caractérisé par le fait que les bobines élémentaires de l'enroulement induit (24) sont reliées entre elles pour constituer une pluralité de phases électriquement décalées, toutes les phases comportant en série le même nombre de bobines élémentaires induites et étant régulièrement réparties sur le stator.

9. Alternateur selon la revendication 8, caractérisé par le fait que les bobines élémentaires de l'enroulement induit (24) sont reliées entre elles pour constituer une pluralité de phases électriquement décalées, toutes les phases étant constituées d'une seule bobine élémentaire.

10. Alternateur selon les revendications 8 et 9, caractérisé par le fait que chaque phase est reliée, directement ou non, à au moins une des bornes de l'alternateur par un interrupteur électronique commandable ou non commandable.

11. Alternateur selon la revendication 10 dans laquelle les 2q phases induites sont réparties continûment sur le stator, caractérisé par le fait que les 2q phases sont toutes reliées à un point commun par une de leurs extrémités constituant les entrées pour les phases impaires et les sorties pour les phases paires, chaque autre extrémité étant reliée par un composant électronique commandable ou non commandable, par exemple une diode (29,30,31,32) à l'une des bornes de l'alternateur, le point commun étant relié à l'autre borne de la machine, toutes les diodes étant orientées passantes dans le même sens entre les deux bornes de l'alternateur.

12. Alternateur selon les revendications 10 et 11, caractérisé par le fait que les 2q phases sont disposées en série deux à deux pour constituer B branches, elles-mêmes disposées en parallèle entre les deux bornes de l'alternateur, chaque branche comprenant deux phases dont les entrées sont reliées par un composant électronique commandable ou non commandable, par exemple une diode, à l'une des bornes de l'alternateur, et dont les sorties sont reliées d'une part, à chacune des sorties des phases de parité opposée, et d'autre part, à chacune des bornes de l'alternateur par deux composants électroniques commandables ou non commandables, par exemple des diodes, toutes les diodes étant orientées passantes dans le même sens entre les deux bornes de l'alternateur.

13. Alternateur selon la revendication 12, caractérisé par le fait que chaque phase disposée en série peut être constituée par la mise en série de deux ou plusieurs phases peu décalées électriquement entre elles.

14. Alternateur selon les revendications 1 à 13, caractérisé par le fait que cet alternateur est réversible et peut fonctionner en moteur en maintenant le sens passant des composants électroniques commandables.

## Claims

1. An alternator having a non-zero mean flux and comprising a stator (21) and a rotor (22) coaxial with each other, the stator carrying firstly a first, field, winding (23) supplied with direct current, and secondly a second, induced current, winding (24), the rotor carrying a third winding (25), the arrangement being such that the field winding (23) generates a field that induces currents in the third winding (25), with the said currents generating a further exciting field in relative rotation with respect to the movable part with magnetic interaction with the induced current winding (24), the elementary coils of the induced current winding (24) being firstly coupled magnetically with the field winding (23) in at least some positions of the rotor, and, secondly, connected to the terminals of the machine through at least one electronic component, controllable or not controllable, so as to supply or receive a direct current, characterised by the fact that the electronic component or components, controllable or not controllable, enable current to circulate in the elementary coils of the induced current winding in only the sense in which it sets up in the poles of the stator a flux of the same sense as the flux produced by the field winding.

2.  An alternator according to Claim 1, characterised by the fact that it constitutes a homopolar machine.

3.  An alternator according to Claim 1, characterised by the fact that its rotor (22) includes a plurality of pairs of electrically conductive bars (25) spaced apart on its periphery at regular intervals, the two bars of a pair being interconnected.

4.  An alternator according to Claim 3, characterised by the fact that each of the bars (25) of a pair is common to two consecutive pairs of bars, the assembly of the bars constituting a squirrel cage.

5.  An alternator according to Claim 4, characterised by the fact that portions of the field winding (23) and the induced current winding (24) are disposed in each slot (27).

6.  An alternator according to Claim 4, characterised by the fact that one of the windings (23, 24) has a multiple pole pitch equal to the other, the number of bars in the rotor being equal to $\frac{2P}{R} \pm K \frac{2P}{2q}$ ,
    where 2P is the number of poles carrying a field winding, 2q is the number of phases, and K and R are factors equal to 1 or 2.

7.  An alternator according to one of Claims 1 to 6, characterised by the fact that the electronic components, controllable or not controllable, that establish a direction of current flow in the elementary coils in the induced current winding (24) are diodes, or transistors, or thyristors, or any other interruptor.

8.  An alternator according to Claim 7, characterised by the fact that the elementary coils of the induced current winding (24) are connected together so as to constitute a plurality of electrically offset phases, with all the phases comprising in series the same number of elementary induced current coils and being spaced apart on the stator at regular intervals.

9.  An alternator according to Claim 8, characterised by the fact that the elementary coils of the induced current winding (24) are connected together so as to constitute a plurality of electrically offset phases, with all the phases being defined by a single elementary coil.

10. An alternator according to Claims 8 and 9, characterised by the fact that each phase is connected, directly or indirectly, to at least one of the terminals of the alternator through a controllable or non-controllable electronic interruptor.

11. An alternator according to Claim 10, in which the 2q induced current phases are distributed continuously over the stator, characterised by the fact that the 2q phases are all connected to a common point through one of their ends constituting the inputs for the unequal phases and the outputs for the equal phases, with each of their other ends being connected through a controllable or non-controllable electronic component, for example a diode (29, 30, 31, 32), to one of the terminals of the alternator, the common point being connected to the other terminal of the machine, and all of the diodes being so orientated as to pass current in the same direction between the two terminals of the alternator.

12. An alternator according to Claims 10 and 11, characterised by the fact that the 2q branches are disposed in series, two by two, so as to constitute B branches, which are themselves disposed in parallel between the two terminals of the alternator, each branch comprising two phases the inputs of which are connected through a controllable or non-controllable electronic component, for example a diode, to one of the terminals of the alternator, with their outputs being connected firstly to each of the outputs of the phases of opposite polarity, and secondly to each of the terminals of the alternator through two controllable or non-controllable electronic components, for example diodes, with all of the diodes being orientated so as to pass current in the same direction between the two terminals of the alternator.

13. An alternator according to Claim 12, characterised by the fact that each phase disposed in series may be constituted by putting in series two or more phases which are electrically offset from each other by a small amount.

14. An alternator according to Claims 1 to 13, characterised by the fact that the said alternator is reversible, and is able to operate as a motor while maintaining the direction of conduction of the controllable electronic components.

**Patentansprüche**

1. Alternator mit mittlerem Fluß, von Null abweichend, enthaltend einen koaxialen Stator (21) und einen koaxialen Rotor (22), wobei der Stator einerseits eine erste, gleichstromgespeiste induzierende Wicklung (23) und andererseits eine zweite, induzierte Wicklung (24) enthält, während der Rotor eine dritte Wicklung (25) trägt, wobei die Anordnung so beschaffen ist, daß die induzierende Wicklung (23) ein Feld erzeugt, welches in der dritten Wicklung (25) Ströme induziert, während die genannten Ströme durch relative Drehung im Verhältnis zum beweglichen Teil unter magnetischer Einwirkung mit der induzierten Wicklung (24) ein weiteres induzierendes Feld erzeugen, wobei die Einzelspulen der induzierten Wicklung (24) einerseits wenigstens in bestimmten Rotorstellungen magnetisch mit der induzierenden Wicklung (23) gekoppelt und andererseits mit den Klemmen der Maschine über wenigstens eine elektronische, steuerbare oder nicht steuerbare, Komponente verbunden sind, um einen Gleichstrom zu liefern oder zu empfangen, **dadurch gekennzeichnet,** daß die steuerbare(n) oder nicht steuerbare(n) elektronische(n) Komponente(n) die Stromzirkulation in den Einzelspulen der induzierten Wicklung nur in der Richtung zuläßt (zulassen), wo in den Polen des Stators ein Fluß in gleicher Richtung wie der Fluß erzeugt wird, der durch die induzierende Wicklung bewirkt wird.

2. Alternator nach Anspruch 1, **dadurch gekennzeichnet,** daß er eine gleichpolige Maschine bildet.

3. Alternator nach Anspruch 1, **dadurch gekennzeichnet,** daß dessen Rotor (22) eine Vielzahl von elektrisch leitfähigen Stabpaaren (25) aufweist, die an der Peripherie gleichmäßig verteilt sind, wobei die beiden zu einem solchen Paar gehörenden Stäbe miteinander verbunden sind.

4. Alternator nach Anspruch 3, **dadurch gekennzeichnet,** daß jeder der Stäbe (25) eines Paars mit zwei anschließenden Stabpaaren zusammenhängt, wobei sämtliche Stäbe einen Käfig bilden.

5. Alternator nach Anspruch 4, **dadurch gekenn-**
**zeichnet,** daß in jedem Einschnitt (27) induzierende Wicklungsteile (23) und induzierte Wicklungsteile (24) angeordnet sind.

6. Alternator nach Anspruch 4, **dadurch gekennzeichnet,** daß eine der Wicklungen (23, 24) eine Polteilung hat, die ein gerades Vielfaches der anderen ausmacht, ist die Anzahl der Stäbe des Rotors gleich $\frac{2P}{R} \pm K \frac{2P}{2q}$ , wobei 2P die Zahl der Pole bezeichnet, welche eine induzierende Wicklung tragen, 2q die Anzahl der Phasen, K und R sind dabei Faktoren gleich 1 oder 2.

7. Alternator nach einem der Ansprüche 1 bis 6, **dadurch gekennzeichnet,** daß die steuerbaren oder nicht steuerbaren elektronischen Komponenten, die in den Einzelspulen der induzierten Wicklung (24) eine Stromlaufrichtung bewirken, Dioden oder Transistoren oder Thyristoren oder jede andere Art von Schaltelement sind.

8. Alternator nach Anspruch 7, **dadurch gekennzeichnet,** daß die Einzelspulen der induzierten Wicklung (24) miteinander verbunden sind, so daß eine Vielzahl elektrisch zueinander versetzter Phasen entsteht, wobei sämtliche Phasen in Reihe die gleiche Anzahl induzierter Einzelspulen aufweisen und gleichmäßig am Stator verteilt sind.

9. Alternator nach Anspruch 8, **dadurch gekennzeichnet,** daß die Einzelspulen der induzierten Wicklung (24) miteinander verbunden sind, um eine Vielzahl von elektrisch zueinander versetzten Phasen zu bilden, wobei die Phasen aus einer einzigen Einzelspule bestehen.

10. Alternator nach Anspruch 8 und 9, **dadurch gekennzeichnet,** daß jede Phase direkt oder indirekt mit wenigstens einer Klemme des Alternators über eine steuerbare oder nicht steuerbare elektronische Schaltvorrichtung verbunden ist.

11. Alternator nach Anspruch 10, wobei die induzierten Phasen 2q am Stator kontinuierlich verteilt sind, **dadurch gekennzeichnet,** daß die Phasen 2q alle an einem ihrer Enden mit einem gemeinsamen Punkt verbunden sind, die die Eingänge für die ungeraden Phasen und die Ausgänge für die geraden Phasen bilden, wobei jedes andere Ende über eine steuerbare oder nicht steuerbare elektronische Komponente, zum Beispiel eine Diode (29, 30, 31, 32) mit einer Klemme des Alternators verbunden ist, während der gemeinsame Punkt mit der anderen Maschinenklemme verbunden ist, wobei sämtliche Dioden zwischen den beiden Klemmen des Alternators in gleicher Richtung durchgehend ausgerichtet sind.

12. Alternator nach Anspruch 10 und 11, **dadurch gekennzeichnet,** daß jeweils zwei Phasen 2q in Reihe angeordnet sind, um die Schenkel B zu bilden, die ihrerseits zwischen den beiden Klemmen des Alternators parallel angeordnet sind, wobei jeder Schenkel zwei Phasen enthält, deren Eingänge durch eine steuerbare oder nicht steuerbare elektronische Komponente, zum Beispiel eine Diode, mit einer der Klemmen des Alternators verbunden sind und deren Ausgänge einerseits mit jedem der Ausgänge der Phasen von umgekehrter Parität und andererseits mit jeder der Klemmen des Alternators durch zwei steuerbare oder nicht steuerbare elektronische Komponenten, zum Beispiel Dioden, verbunden sind, wobei sämtliche Dioden zwischen den beiden Klemmen des Alternators in gleicher Richtung durchgehend ausgerichtet sind.

13. Alternator nach Anspruch 12, **dadurch gekennzeichnet,** daß jede in Reihe angeordnete Phase durch die Reihenschaltung von zwei oder mehreren Phasen gebildet werden kann, die untereinander elektrisch leicht verschoben sind.

14. Alternator nach Anspruch 1 bis 13, **dadurch gekennzeichnet,** daß dieser Alternator reversierbar ist und motorisch wirken kann, wobei gleichzeitig die Durchgangsrichtung der steuerbaren elektronischen Komponenten erhalten bleibt.

FIG. 2

FIG. 1

Ph1 Ph2 Ph3 Ph4 Ph1 Ph2 Ph3 Ph4 Ph1 Ph2 Ph3 Ph4

N S N S N S N S N S N S

E1 E2 E3 E4 E1 E2 E3 E4 E1 E2 E3 E4

S1 S2 S3 S4 S1 S2 S3 S4 S1 S2 S3 S4

## FIG.3

Ph1 Ph2 Ph3 Ph4 Ph1 Ph2 Ph3 Ph4 Ph1 Ph2 Ph3 Ph4

N S N S N S N S N S N S

E1 E2 E3 E4 E1 E2 E3 E4 E1 E2 E3 E4

S1 S2 S3 S4 S1 S2 S3 S4 S1 S2 S3 S4

30 32 29 31

## FIG.4

11

FIG.5

FIG.6

FIG. 7

FIG. 7A

FIG. 7B

FIG. 7C

FIG. 7D

FIG. 7E